# EUROPEAN PATENT APPLICATION

(11) **EP 3 506 488 A1**
(43) Date of publication of application: **03.07.2019**
(21) Application number: 17843316.5
(22) Date of filing: 28.07.2017
(51) Int. Cl.: H02P 6/182, H02P 6/21

(54) **MOTOR CONTROL DEVICE**

(30) Priority: 26.08.2016 JP 2016165438
(71) Applicant: Aisin Seiki Kabushiki Kaisha, Kariya-shi, Aichi 448-8650 (JP)
(72) Inventor: TAKEMOTO Shuichi, Kariya-shi, Aichi-ken 448-8650 (JP)
(74) Representative: Cabinet Beau de Loménie
(86) International application number: PCT/JP2017/027353
(87) International publication number: WO 2018/037830

(57) **Abstract**

Provided is a motor controlling device that allows appropriate startup of the motor within a short period of time irrespectively of a stopped posture of the rotor. At time of startup, a rotation controlling section for controlling a rotor R of a brushless motor M supplies power to an excitation coil of one phase among excitation coils of three phases limitedly for a predetermined time. An induced voltage measurement section measures an induced voltage generated in another excitation coil than the excitation coil to which the power was supplied and based on the result of this measurement, possibility/impossibility of startup is decided. Based on the result of this decision, an excitation coil of one phase among the excitation coils of three phases is set as a supply starting coil to which power is to be supplied first and forced commutation is carried out.

## Description

### Technical Field

This disclosure relates to a motor controlling device configured to control rotation of a rotor by supplying power to a plurality of excitation coils of a brushless motor.

### Background Art

As a motor controlling device, Patent Document 1 discloses a control mode according to which when a forcible startup (referred to as "activation" in this document) of a brushless motor is to be effected, if a rotational speed of the motor fails to reach a preset value within a reference period measured from initiation of the forcible startup, power supply is stopped and also after lapse of a predetermined period measured from this power supply stop, restart is effected.

Further, Patent Document 2 discloses a technique according to which startup of a motor is effected by supplying power to predetermined excitation coils (stationary coils) and if this startup fails, the combination of the excitation coils for startup is changed and restart is effected.

### Citation List

### Patent Literature

Patent Document 1: Japanese Unexamined Patent Application Publication No. 2006-115641
Patent Document 2: Japanese Unexamined Patent Application No. 2003-219684

### Summary of Invention

### Technical Problem

Taking a brushless DC motor for example, (to be referred to simply as "motor" hereinafter), at time of startup of the motor, forced commutation is carried out for rotating its rotor by supplying power to a plurality of excitation coils according to a preset order.

Further, in a brushless DC motor, like a four-pole, six-slot type motor, the number of magnetic poles of the rotor differs from the number of slots, so the rotor will not come to stop with a fixed posture. Therefore, in the forced commutation, even if power is supplied to a plurality of excitation coils according to a preset order, an appropriate torque may not be provided for the rotor for the forced commutation, thus failing to start the motor.

In correspondence with the above, when a motor is to be stopped, it is conceivable to execute control for shifting to a target posture for ensuring reliable startup of the motor. However, in the case of a sensor-less motor having no sensor for sensing rotational posture of the rotor, it is difficult to shift the rotor to the target posture in a reliable manner at time of stopping the motor, so that startup of the motor can fail.

Then, as disclosed in Patent Document 1, it is conceivable to effect control such that forcible startup is effected at time of startup of the motor and also presence/absence of rotor rotation is decided based on a rotational speed of the rotor and after this decision, restart of the motor is effected. With this control, however, when motor startup fails, it takes time until the startup.

On the other hand, in the case of the arrangement disclosed in Patent Document 2 in which combination of the coils at time of startup is changed in the event of failure of motor startup, if startup fails repeatedly, for the respective occasions of such failure, the combination of the plurality of power supply patterns needs to be changed continuously, so the startup of the motor would sometimes take long time.

For reasons mentioned above, there is a need for a motor controlling device that allows appropriate startup of the motor within a short period of time irrespectively of a stopped posture of the rotor even in the case of a sensor-less motor.

### Solution to Problem

According to a characterizing feature of the present disclosure, a motor controlling device comprises:
a rotation controlling section that controls rotation of a rotor constituting a brushless motor by controlling driving power for excitation coils of three phases of a stator constituting the brushless motor; and
an induced voltage measurement section that measures an induced voltage generated in the excitation coils in association with rotation of the rotor;
wherein the rotation controlling section executes:
   a one-phase power supply step for supplying power to an excitation coil of one phase among the excitation coils of three phases limitedly for a predetermined period at time of startup of the brushless motor;
   a decision step for deciding advisability of the startup based on result of a measurement made by the induced voltage measurement section as an induced voltage generated in an excitation coil of a different phase from the excitation coil to which the power is supplied at the one-phase power supply step; and
   a forced commutation step for effecting forced commutation with setting an excitation coil of one phase among the excitation coils of the three phases as a power supply starting coil to which power is to be supplied first, based on decision result of the decision step.

With this characterizing feature, at time of motor startup, at the one-phase power supply step, power is supplied (one-phase power supply) to a set excitation coil limitedly for a predetermined period. Further, when this one-phase power supply is effected, an inducted voltage generated in another excitation coil of other phase than the excitation coil used in the one-phase power supply is measured by the inducted voltage measurement section and then, based on the result of the measurement, the rotation controlling section can decide possibility/impossibility of motor startup at the decision step.

Suppose that a stopped angle of the rotor is defined as an angle of intersection between a virtual line interconnecting a pair of slots excited in the power supply starting coil to which power is supplied first and a virtual line interconnecting particular magnetic poles of the rotor. With this definition, for instance, when power is supplied to the power supply starting coil (when the one-phase power supply is effected), if the rotor is present at a stopped angle at which a large torque will be applied to the rotor, the induced voltage measured by the induced voltage measurement section is high, so it may be decided that motor startup is easy. On the other hand, when the torque applied to the rotor is extremely low or almost non-existent, the induced voltage measured by the induced voltage measurement section is low, so it may be decided that motor startup is impossible.

For the reasons mentioned above, based on induced voltage associated with power supply at the one-phase power supply step, it is possible to decide possibility/impossibility of motor startup. Moreover, at the forced commutation step, by setting a power supply starting coil based on the decision of the rotation controlling section at the decision step as a power supply starting coil and then effecting power supply first to the set power supply starting coil, reliable startup of motor is made possible. In particular, with the above-described arrangement, reliable motor startup can be realized without carrying out a process of measuring a rotational speed of the rotor after initiation of the motor startup control.

In this way, it has become possible to provide a motor controlling device that allows appropriate startup of the motor within a short period of time irrespectively of a stopped posture of the rotor even in the case of a sensor-less motor.

As a further characterizing feature, preferably, at the decision step, in case that the rotation controlling section decides the startup is possible, the rotation controlling section sets the excitation coil to which power was supplied at the one-phase power supply step as the power supply starting coil.

In this way, if it is decided at the decision step that startup of the motor is possible, the rotation controlling section effects forced commutation by setting the excitation coil to which power was supplied at the one-phase power supply step as the power supply starting coil. Thus, with the magnetic field initially generated in the excitation coils, a torque needed for startup of the motor is applied to the rotor, thereby to realize reliable startup of the motor.

As a further characterizing feature, preferably, at the decision step, in case the rotation controlling section decides that the startup is impossible, the rotation controlling section sets an excitation coil of a different phase from the phase of the excitation coil to which power was supplied at the one-phase power supply step as the power supply starting coil.

In this way, in case the decision step decides that startup of the motor is impossible, the rotation controlling section sets an excitation coil of a different phase from the phase of the excitation coil to which power was supplied at the one-phase power supply step as the power supply starting coil for the forced commutation. Thus, with the magnetic field initially generated in the excitation coils, a torque needed for startup of the motor is applied to the rotor, thereby to realize reliable startup of the motor.

As a further characterizing feature, preferably, at the decision step, the rotation controlling section decides that startup of the brushless motor is possible if the induced voltage measured at time of execution of the one-phase power supply step is equal to or greater than a threshold value and decides that startup of the brushless motor is not possible if the induced voltage measured at time of execution of the one-phase power supply step is below the threshold value.

With this arrangement, the rotation controlling section effects the decision whether startup of the motor is possible or not, through comparison between the induced voltage measured by the induced voltage measurement section at time of the execution of the one-phase power supply and a threshold value. Thus, the processing is made easy.

### Brief Description of Drawings

[Fig. 1] is a circuit diagram showing a configuration of a motor controlling device,
[Fig. 2] is a section view showing a stator and a rotor of a motor,
[Fig. 3] is a diagram schematically showing a plurality of stopped angles of the rotor,
[Fig. 4] is a timing chart showing an induced voltage associated with one-phase power supply,
[Fig. 5] is a flowchart of startup control of the motor,
[Fig. 6] is a view showing a stop angle of the rotor corresponding to 45 degrees in Further Embodiment (a),
[Fig. 7] is a timing chart showing an induced voltage associated with one-phase power supply in Further Embodiment (a), and
[Fig. 8] is a flowchart of startup control of the motor in Further Embodiment (a).

### Brief Description of Embodiments

Next, an embodiment of the present disclosure will be explained with reference to the accompanying drawings.

### [Basic Configuration]

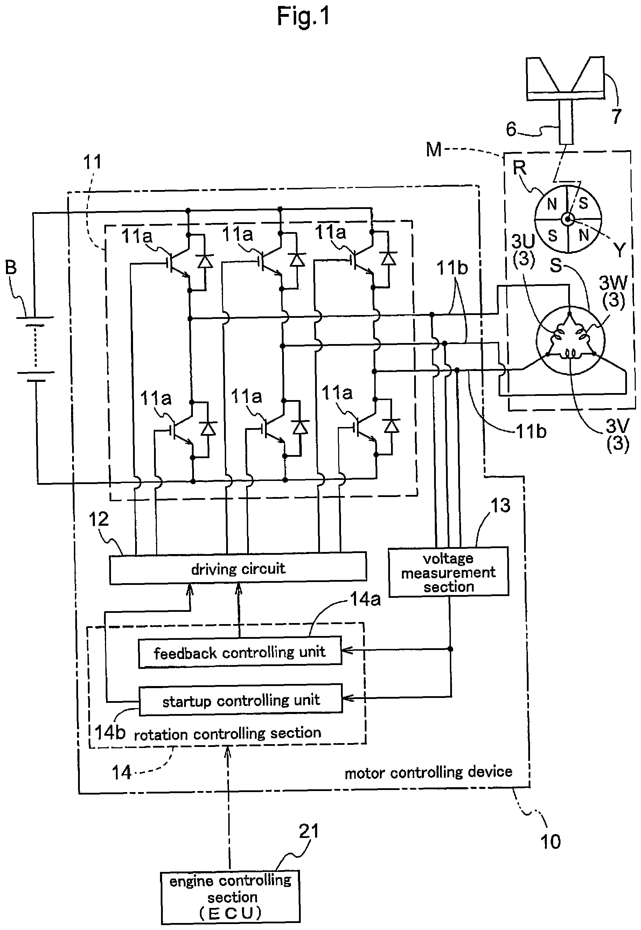

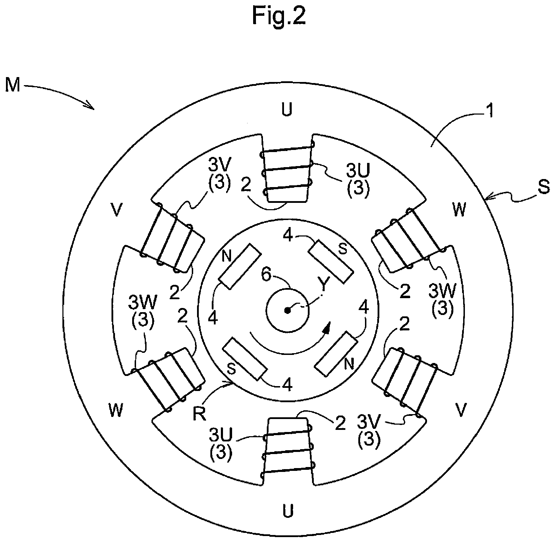

As shown in Fig. 1 and Fig. 2, a sensor-less brushless DC motor M (to be referred to as "motor M" hereinafter) is configured with a rotor R rotatable about a rotational axis Y accommodated within a stator S. And, a motor controlling device 10 for controlling this motor M is provided.

The stator S includes six slots 2 which protrude radially inward from a ring-shaped yoke 1. On each slot 2, a length of excitation coil 3 is wound. The rotor R includes four permanent magnets 4, thus forming four magnetic poles in its circumferential direction. In this way, this motor M is configured as four-pole, six-slot type.

The motor M is arranged for driving e.g. a water pump for circulating cooling water in an internal combustion engine of a vehicle. Thus, an impeller 7 of the water pump is attached to a shaft 6 coupled with the rotor R. Incidentally, this motor M may be used also for driving an oil pump, a radiator fan, instead of the water pump.

### [Motor Controlling Device]

As shown in Fig. 1, the motor controlling device 10 includes an inverter circuit 11, a driving circuit 12, a voltage measurement section 13 (an example of "induced voltage measurement section"), and a rotation controlling section 14.

For discrimination among U phase, V phase and W phase of the excitation coils 3, the excitation coils 3 of the six slots 2 are shown with signs 3U, 3V, 3W, respectively. The inverter circuit 11 includes six switching elements 11a for controlling power from a power source B and includes also three power lines 11b for supplying/draining power generated by these switching elements 11a to/from the excitation coils 3.

The driving circuit 12 includes semiconductor devices such as logic gates, comparators, etc. for setting duty ratios of signals for driving the six switching elements 11a of the inverter circuit 11. This driving circuit 12 is set with driving timings of the six switching elements 11a via control signals from the rotation controlling section 14.

The voltage measurement section 13 measures a voltage of each phase relative to a neutral potential based on a current flowing in each one of the three power lines 11b. With this voltage measurement section 13, when the voltage of U phase is to be measured for instance, the voltage is measured via two-phase comparison which compares potentials of the power lines 11b corresponding to V phase and W phase. Then, the voltage measurement section 13 outputs the voltage value of each power lines 11b to the rotation controlling section 14.

The rotation controlling section 14 realizes startup and stop of the motor M by controlling driving power to be supplied to the excitation coils 3 of the three phases based on control signals from an engine controlling section 21 as an ECU provided in the vehicle. In particular, the rotation controlling section 14 includes a feedback controlling unit 14a for effecting rotation control at time of operation (at time of rotation) of the motor M and a startup controlling unit 14b for effecting startup control at time of startup of the motor M.

For realizing the rotation control, the feedback controlling unit 14a acquires a rotational angle of the rotor R from voltage values of the respective phases acquired by the voltage measurement section 13 at time of rotation of the rotor R and then provides a control signal based on this rotational angle to the driving circuit 12, thus realizing sensor-less control.

For realizing speedy and reliable startup of the motor M, the startup controlling unit 14b effects one-phase power supply by controlling the driving circuit 12 and decides possibility or impossibility of the startup of the motor M based on the voltage value measured by the voltage measurement section 13 and then effects forced commutation control based on this decision. This startup control by the startup controlling unit 14b will be described in greater details later herein.

The rotation controlling section 14 is constituted of combination of a hardware which is a circuit board including a CPU (Central Processing Unit), a DPS (Digital Signal Processor), an ASIC (Application Specific Integrated Circuit), etc. and a software for controlling such CPU, DSP, ASIC, etc. In this example, it is assumed that the feedback controlling unit 14a and the startup controlling unit 14b are constituted respectively of a software. However, a part thereof may be constituted of a hardware also.

### [Mode of Control]

In this motor M, the yoke 1 and the six slots 2 are formed integral with each other by laminating ferromagnetic members such as electromagnetic steel plates, and the four magnetic poles are formed in the rotor R. Therefore, at time of stop of the motor M, the motor will be stopped at one of a plurality of stopped angles (stopped postures of the rotor R) due to a magnetic attraction force acting between the magnetic poles and the six slots 2.

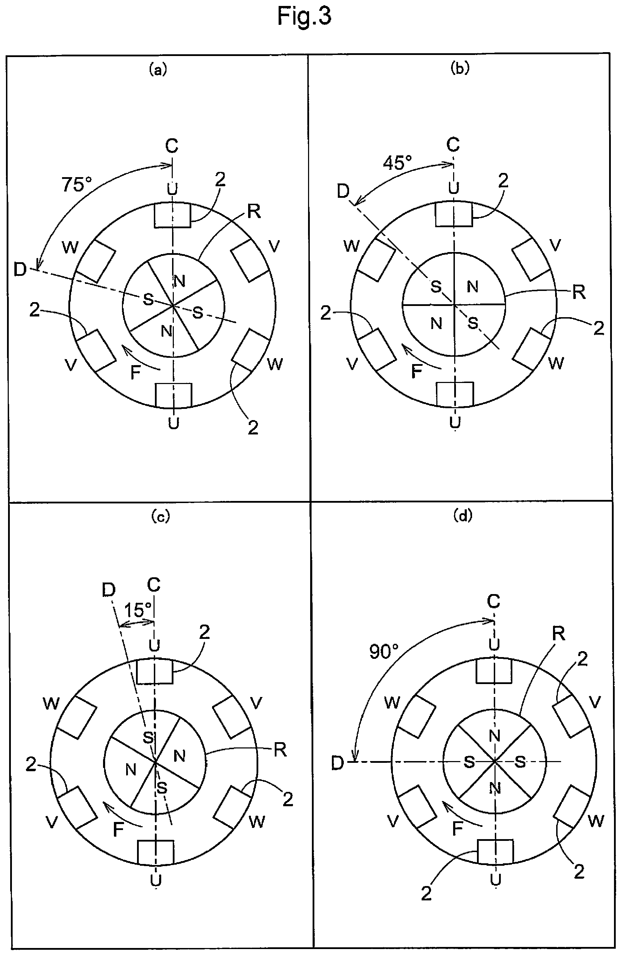

In Fig. 3, relative to a slot line C as a virtual line interconnecting the pair of slots 2 of U phase, an angle formed by intersection of this slot line C and a magnetic pole line D interconnecting a pair of S poles of the rotor R under a stopped state is defined as a stopped angle of the rotor R. Incidentally, (a), (b), (c) and (d) in the same drawing show 75 degrees, 45 degrees, 15 degrees and 90 degrees as such stopped angles of the rotor R.

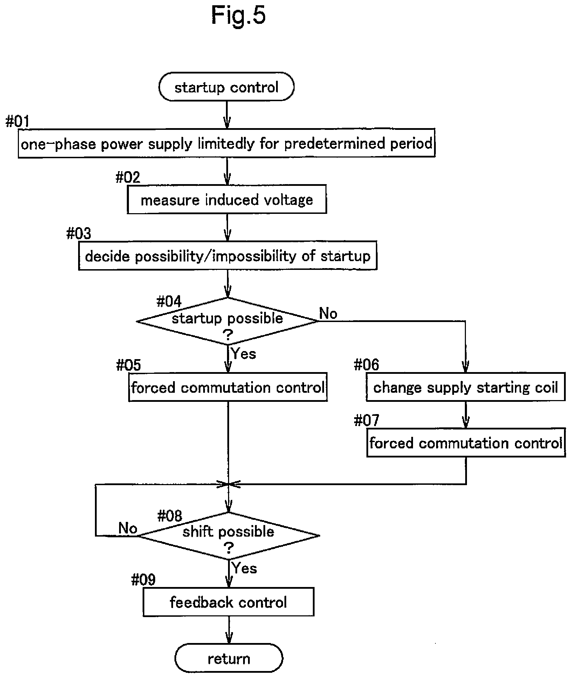

In this way, since the stopped angle of the rotor R is not fixed, when the rotation controlling section 14 is to start up the motor M based on information from the engine controlling section 21, the startup controlling unit 14b effects a control shown in the flowchart of Fig. 5 in order to enable reliable and speedy startup.

Namely, in the control, the startup controlling unit 14b controls the driving circuit 12 to effect one-phase power supply in a predetermined power supplying direction limitedly for a predetermined period to the U phase excitation coil 3U which is set in advance as a "supply starting coil". And, an induced voltage generated in at least one of the other excitation coils 3 (3V, 3W) at a timing in synchronism with this one-phase power supply is measured by the voltage measurement section 13 and the startup controlling unit 14b decides possibility/impossibility of startup of the motor M (steps from #01 to #03).

In this control, the process of effecting the one-phase power supply by the startup controlling unit 14b through control of the driving circuit 12 (step #01) is "one-phase power supply step", and a voltage value of the induced voltage measured by the voltage measurement section 13 corresponds to the stopped angle of the rotor R. Further, the process effected by the startup controlling unit 14b to decide possibility/impossibility of startup of the motor M based on the measured voltage value (step #03) is "decision step".

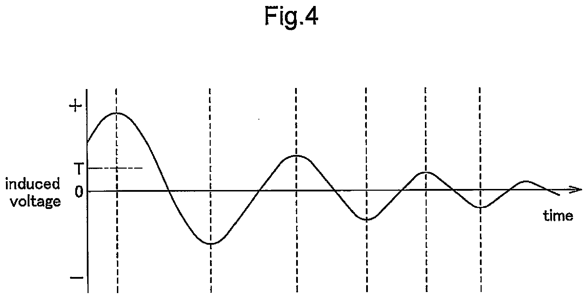

Specifically, with execution of the one-phase power supply, N poles are created at the leading ends of the pair of U-phase slots 2 opposed to the rotor R, and the rotor R rotates in a target rotational direction F by an angle equal to the stopped angle. When this rotation passes 0 degree, a rotational force in the opposite direction becomes active to converge (suppress) the rotation progressively and the original stopped angle will be restored eventually. As a result of this, in the induced voltage of another excitation coil 3 (3V, 3W) in association with the one-phase power supply, a phenomenon of a negative voltage generated after generation of a positive voltage will be repeated and these voltage will be diminished over time as shown in Fig. 4. Incidentally, in the startup control relating to this motor M, the target rotational direction F shown in Fig. 3 is the direction of rotating the rotor R.

Further, when the voltage measurement section 13 measures the induced voltage, it is not necessary to acquire the plurality of peak values of the induced voltage shown in the chart of Fig. 4. Rather, it suffices to acquire the maximum (initial) induced voltage generated in association with the one-phase power supply. Therefore, an induced voltage generated in at least one of the other excitation coils 3 (3V, 3W) than the excitation coil 3U will be measured at the time parallel with the one-phase power supply.

Further, such induced voltage generated in association with the one-phase power supply will be a highest voltage when the stopped angle of the rotor R is 75 degrees as shown in Fig. 3 (a) and the torque applied to the rotor R will also be largest (highest). Also, when the stopped angle of the rotor R is 45 degrees as shown in Fig. 3 (b), a voltage slightly lower in comparison with 75 degrees will be generated and a torque slightly smaller (lower) in comparison with 75 degrees will be applied. Still further, at the angle of 15 degrees as shown in Fig. 3 (c), a very small induced voltage will be generated and at the angle of 90 degrees as shown in Fig. 3 (c), almost no induced voltage will be generated.

In this way, the voltage value of the induced voltage corresponds to the stopped angle of the rotor R and the greater the value of the induced voltage measured by the voltage measurement section 13 in association with one-phase power supply, the better the startability of the motor M. Conversely, the smaller the value of the induced voltage measured by the voltage measurement section 13 in association with one-phase power supply, the worse the startability of the motor M. For this reason, a threshold value T ("predetermined voltage value") is set such that the startup controlling unit 14b may decide startup of the motor M is possible when the stopped angle of the rotor R is at 75 degrees or 45 degrees or 15 degrees and decide startup of the motor M is impossible when the stopped angle of the rotor R is at 90 degrees (including the vicinity of 90 degrees).

And, in case the startup controlling unit 14b decides startup of the motor M is possible (the case of the induced voltage measured by the voltage measurement section 13 being equal to or greater than the threshold value T), the startup controlling unit 14b initiates the forced commutation control in the form of supplying power initially to a predetermined excitation coil 3 (3U) as the supply starting coil in a predetermined power supplying direction. Also, in case the startup controlling unit 14b decides startup of the motor M is impossible (the case of the induced voltage measured by the voltage measurement section 13 being below the threshold value T), the startup controlling unit 14b initiates the forced commutation control in the form of firstly changing the supply starting coil to the excitation coil 3 (3W) and then supplying power initially to this changed supply starting coil (steps from #04 to #07).

The "forced commutation control" (forced commutation step) is a control in which forced rotation of the rotor R is effected by supplying power sequentially to the three phases of excitation coils 3 of U phase, V phase and W phase according to a fixed pattern by a predetermined cycle.

In this way, in case the startup controlling unit 14b decides startup of the motor M is possible, as described above, power is supplied first in a predetermined power supplying direction to a predetermined excitation coil 3 (3U) at time of initiation of the forced commutation control. With this, a large torque is applied to the rotor R at time of initiation of the forced commutation control by the startup controlling unit 14b, thus enabling reliable startup.

Conversely, in case the startup controlling unit 14b decides startup of the motor M is impossible, the startup controlling unit 14b initiates the forced commutation control in the form of firstly changing the supply starting coil to the excitation coil 3 (3W) and then supplying power initially to this changed the excitation coil 3 (3W) in the predetermined power supplying direction. With this, a large torque is applied to the rotor R at time of initiation of the forced commutation control, thus enabling reliable startup of the motor M.

Incidentally, the startup controlling unit 14b may be configured to decide startup of the motor M is impossible in the case also of the stopped angle of the rotor R being 15 degrees as shown in Fig. 3 (c), like the case of the stopped angle of the rotor R being 90 degrees as shown in Fig. 3 (d). In case the predetermined control mode effected by the startup controlling unit 14b is set, when the stopped angle of the rotor R is 90 degrees, like the foregoing case, the startup controlling unit 14b will change the supply starting coil to the excitation coil 3 (3W). Whereas, when the stopped angle of the rotor R is 15 degrees, the startup controlling unit 14b will change the supply starting coil to the excitation coil 3 (3V). This change is effected based on the induced voltage measured by the voltage measurement section 13.

In this way, when the stopped angle of the rotor R is 90 degrees, the supply starting coil will be changed to the excitation coil 3 (3W), thus enabling startup of the motor M like the state of the stopped angle of the rotor R being 30 degrees. And, when the stopped angle of the rotor R is 15 degrees, the supply starting coil will be changed to the excitation coil 3 (3V), thus enabling startup of the motor M like the state of the stopped angle of the rotor R being 75 degrees.

Further, at time of execution of the forced commutation control, the control of feeding back the rotational angle of the rotor R is not effected. But, a rotational speed (number of rotations (revolutions) per unit period) of the rotor R alone will be acquired based on the voltage signal measured by the voltage measurement section 13.

And, when it is decided that the rotational speed of the rotor R reaches a preset value and the rotation controlling section 14 can shift to the feedback control, the process shifts to the feedback control (steps #08, #09).

In the feedback control, the feedback controlling unit 14a acquires a rotational angle of the rotor R based on the voltage signal of the respective phase from the voltage measurement section 13 and drives the respective switching element 11a of the inverter circuit 11, thus realizing appropriate rotation without stepping-out.

### [Function and Effect of Embodiments]

In this way, when the motor M is to be started up, at the one-phase power supply step, the startup controlling unit 14b effects for the driving circuit 12 the one-phase power supply for supplying power temporarily limitedly for the predetermined period to the power supply starting coil and the voltage measurement section 13 measures an induced voltage generated in another excitation coil 3 in parallel with this one-phase power supply. With this measurement of induced voltage, it becomes possible for the startup controlling unit 14b to decide whether the startup of the rotor R is possible or not. Namely, without need for a sensor or the like for detecting a stopped angle of the rotor R, decision of the startup of the motor M being possible or impossible is realized in correspondence with a stopped angle of the rotor R.

And, in case startup of the rotor R is possible as indicated by the result of the decision made by the startup controlling unit 14b, forced commutation control is effected in the form of supplying power in a predetermined power supplying direction firstly to a predetermined supply starting coil (3U). With this, a torque is applied to the rotor R from the initial stage of the forced commutation control, thus realizing reliable startup.

Further, in case startup of the rotor R is impossible as indicated by the result of the decision made by the startup controlling unit 14b, forced commutation control is effected in the form of the startup controlling unit 14b changing the supply starting coil and supplying power first to the changed supply starting coil. With this, a torque is applied to the rotor R from the initial stage of the forced commutation control, thus realizing reliable startup. Further, when the decision is to be made, a process of comparing the induced voltage measured by the voltage measurement section 13 with the threshold value T is effected. So, the startup controlling unit 14b can effect the decision extremely easily.

In particular, with the above arrangement, in comparison with an arrangement in which forced commutation control is effected at time of startup of the motor M and a rotational state of the rotor R is decided after lapse of a predetermined period measured form the initiation of the forced commutation control, it is possible to reduce a period until execution of the forced commutation control after the processing by the startup controlling unit 14b to decide the stopped angle of the rotor R at time of startup of the motor M. In this way, in spite of absence of any sensor or the like for detecting the stopped angle of the rotor R, startup of the motor M can be effected in a reliable and speedy manner.

### [Other Embodiments]

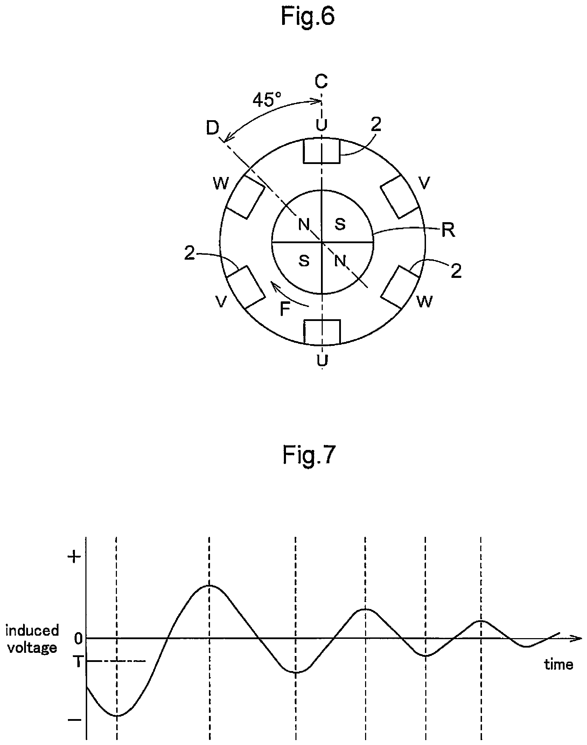

The present disclosure may be embodied alternatively other than the embodiment described above (those having identical functions as the foregoing embodiment will be denoted with same numerals or signs as those used in the foregoing embodiment).
(a) As described in the foregoing embodiment, even when the control of causing the startup controlling unit 14b to stop the rotor R at a stopped angle suitable for startup of the motor M has been effected, it is still possible for the stopped angle of the rotor R to deviate from the angle explained in the foregoing embodiment, due to effect of load or some other factor. As one example thereof as shown in Fig.6, there will be explained a mode of control in which the polarity of the magnetic pole of the rotor R becomes opposite to that shown in Fig. 3 (b) at the same angle as the 45 degrees stopped angle (stopped posture) explained in the foregoing embodiment.

If the one-phase power supply is effected to the predetermined phase excitation coil 3 (3U) in the situation of the rotor R being present at the stopped angle shown in Fig. 6 as described above by the startup controlling unit 14b via controlling the driving circuit 12 in the predetermined power supplying direction (the same direction as the power supplying direction explained in the foregoing embodiment), a torque will be applied to the rotor R for its rotation in the direction opposite to the target rotational direction F. So, the induced voltage generated in another phase excitation coil 3 (3V or 3W) will appear as shown in the chart of Fig. 7, in the reverse form from that shown in the chart disclosed in the foregoing embodiment.

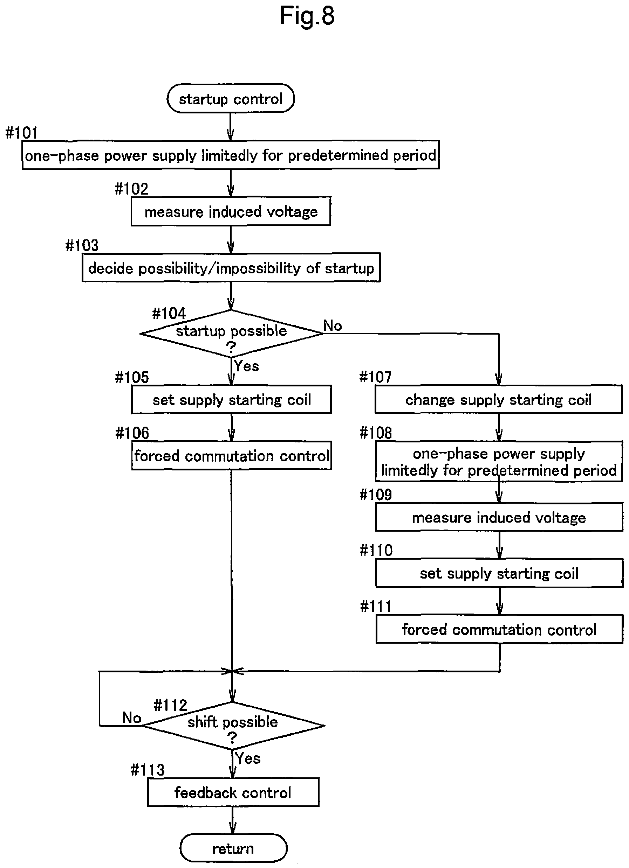

With such stopped angle of the rotor R too, it is possible to acquire an appropriate torque along the target rotational direction F by changing the supply starting coil to which the startup controlling unit 14b is to supply power. For this reason, a control will be set as shown in the flowchart of Fig. 8.

The flowchart shown in Fig. 8 is basically same as the flow of control explained in the foregoing embodiment, so when the stopped angle of the rotor R is any one of those shown in Figs. 3 (a) through (c), like the steps #01 through #04 in the foregoing embodiment, steps #101 through #104 will be effected. Namely, in case the startup controlling unit 14b decides startup of the motor M is possible, the forced commutation control will be initiated in the form of setting a predetermined excitation coil 3 (3U) as the supply starting coil and then supplying power firstly thereto in the predetermined power supplying direction (steps #105, #106).

However, if a negative induced voltage is generated by the one-phase power supply at step #101 as shown in the chart of Fig. 7, the induced voltage measured by the voltage measurement section 13 will exceed the threshold value T (exceed it in the negative direction), so although the startup controlling unit 14b will decide at step #104 that startup of the motor M is possible, at step #105, the startup controlling unit 14b will set (change) the supply starting coil to another excitation coil 3 (3V, 3W) and initiate the forced commutation control at step #106.

Incidentally, at this control effected at step #105, it is also conceivable to initiate the forced commutation control by comparing and reversing the power supplying direction of the power to be supplied to the excitation coil 3 (3U), without changing this predetermined excitation coil 3 (3U) as the supply starting coil.

Further, if it is decided at step #104 that startup of the motor M is impossible, it is conceivable that the stopped angle of the rotor R is the 90 degrees stopped angle as shown in Fig. 3 (d) or an angle similar thereto, but the polarity of the magnet poles of the rotor R is the opposite. Accordingly, the startup controlling unit 14b changes the supply starting coil to the excitation coil 3 (3W) and the startup controlling unit 14b also effects one-phase power supply to this excitation coil 3 (3W), and the voltage measurement section 13 measures the induced voltage generated in at least one of the other excitation coils (3U, 3V) than this excitation coil 3 (3W), and based on this measured value, the supply starting coil will be set and the forced commutation control will be initiated (steps #107 through #111).

In this control, the startup controlling unit 14b changes the supply starting coil to the excitation coil 3 (3W). However, since such changed supply starting coil can be any other than the excitation coil 3 (3U), the supply starting coil can be changed to the excitation coil 3 (3V) alternatively.

Namely, if it is decided at step #104 that the startup of the rotor R is impossible, the startup controlling unit 14b will effect the one-phase power supply in repetition. However, since the rotational direction of the rotor R can be confirmed from the induced voltage (positive or negative sign of the induced voltage) measured by the voltage measurement section 13 with one-phase power supply in the second round, the startup controlling unit 14b will decide advisability (appropriateness/inappropriateness) of the changed supply starting coil (3W) and if it is decided that this coil is appropriate (induced voltage is positive), then, this changed supply starting coil (3W) as the supply starting coil for the forced commutation control.

Further, if the startup controlling unit 14b decides the coil is inappropriate (induced voltage measured by the voltage measurement section 13 is negative), then, the startup controlling unit 14b will change the supply starting coil to the excitation coil 3 (V). In this way, the startup controlling unit 14b sets a supply starting coil based on the positive/negative sign of the induced voltage generated with the second round of one-phase power supply. Thus, irrespective of the stopped angle of the rotor R, when the forced commutation control is to be initiated, it is possible to apply a torque in the target rotational direction F to rotate the rotor R in that direction.

Incidentally, as the control effected at step #110 in case the startup controlling unit 14b decides the coil is inappropriate (induced voltage measured by the voltage measurement section 13 is negative), it is also conceivable to initiate the forced commutation control with reversing the power supplying direction of the current to the supplied to the excitation coil 3 (3W) without changing this changed excitation coil 3 (3W).

Subsequently, by the forced commutation control at step #106 or the forced commutation control at step #111, the rotor R is rotated. And, if the rotation controlling section 14 decides shifting to the feedback control is possible based on the rotational speed of the rotor R. the process shifts to the feedback control (steps #112, #113). Incidentally, this feedback control is realized by the feedback controlling unit 14a.

In this Further Embodiment (a), in case the startup controlling unit 14b decides that startup of the motor M is impossible, the startup controlling unit 14b effects one-phase power supply for two times, thus involving increase of the number of the process steps. Yet, in comparison with a mode of control in which the startup controlling unit 14b decides the state of rotation of the rotor R after initiation of the forced commutation control, it is possible to reduce the period required until possibility/impossibility of rotation, thus reducing the period until startup of the motor M.
(b) The number of magnetic poles and the number of slots of the motor M are not limited to to those shown in the foregoing embodiment, but can be any desired numbers. Further, in the arrangement having such different number of magnetic poles and different number of slots, the plurality of stopped angles of the rotor R will be different from those disclosed in the foregoing embodiment. However, since the voltage measurement section 13 measures the induced voltage after one-phase power supply and the startup controlling unit 14b compares this with the threshold value T to decide the possibility/impossibility of startup of the motor M, the decision is possible irrespectively of the arrangement and the software of the startup controlling unit 14b need not be changed, so high versatility is realized.
(c) If the periods of acquiring the induced voltage are set e.g. such that a plurality of peak values shown in the chart of Fig. 4 are acquired and these acquired peak values are averaged, accuracy of the decision made by the startup controlling unit 14b can be enhanced.
(d) The timing of control may be set such that with utilization of inertia (dynamic inertia) at time of slight (back and forth) pivotal motion of the rotor R in the forward and reverse directions after one-phase power supply and the forced commutation control may be initiated at time of the rotor R being rotated in the startup direction. With such setting of initiation timing of the forced commutation control, even more reliable startup of the motor M can be realized with effective utilization of inertia of the rotor R.

### Industrial Applicability

This disclosure is applicable to a motor controlling device configured to control rotation of a rotor by supplying power to a plurality of excitation coils.

### Reference Signs List

- 3:: excitation coil
- 13:: voltage measurement section (induced voltage measurement section)
- 14:: rotation controlling section
- M:: brushless motor
- R:: rotor
- S:: stator
- T:: threshold value

## Claims

1. A motor controlling device comprising:
a rotation controlling section that controls rotation of a rotor constituting a brushless motor by controlling driving power for excitation coils of three phases of a stator constituting the brushless motor; and
an induced voltage measurement section that measures an induced voltage generated in the excitation coils in association with rotation of the rotor;
wherein the rotation controlling section executes:
a one-phase power supply step for supplying power to an excitation coil of one phase among the excitation coils of three phases limitedly for a predetermined period at time of startup of the brushless motor;
a decision step for deciding advisability of the startup based on result of a measurement made by the induced voltage measurement section as an induced voltage generated in an excitation coil of a different phase from the excitation coil to which the power is supplied at the one-phase power supply step; and
a forced commutation step for effecting forced commutation with setting an excitation coil of one phase among the excitation coils of the three phases as a power supply starting coil to which power is to be supplied first, based on decision result of the decision step.

2. The motor controlling device of claim 1, wherein at the decision step, in case that the rotation controlling section decides the startup is possible, the rotation controlling section sets the excitation coil to which power was supplied at the one-phase power supply step as the power supply starting coil.

3. The motor controlling device of claim 1 or 2, wherein at the decision step, in case the rotation controlling section decides that the startup is impossible, the rotation controlling section sets an excitation coil of a different phase from the excitation coil to which power was supplied at the one-phase power supply step as the power supply starting coil.

4. The motor controlling device of any one of claims 1-3, wherein at the decision step, the rotation controlling section decides that startup of the brushless motor is possible if the induced voltage measured at time of execution of the one-phase power supply step is equal to or greater than a threshold value and decides that startup of the brushless motor is not possible if the induced voltage measured at time of execution of the one-phase power supply step is below the threshold value.
